# EUROPEAN PATENT SPECIFICATION

(11) **EP 4 063 156 B1**
(45) Date of publication and mention of the grant of the patent: **27.11.2024**
(21) Application number: 22152555.3
(22) Date of filing: 20.01.2022
(51) Int. Cl.: B60K 1/04, B62D 21/15, B62D 25/20

(54) **VEHICLE BATTERY PACK PERIPHERAL STRUCTURE**
PERIPHERE STRUKTUR FÜR FAHRZEUGBATTERIEPACK
STRUCTURE PÉRIPHÉRIQUE DE BLOC-BATTERIE DE VÉHICULE

(30) Priority: 22.03.2021 JP 2021047027
(43) Date of publication of application: 28.09.2022
(73) Proprietor: Suzuki Motor Corporation, Hamamatsu-shi, Shizuoka 432-8611 (JP)
(72) Inventor: TAKAICHI, Kota, Hamamatsu-shi, 432-8611 (JP); WATANABE, Koichiro, Hamamatsu-shi, 432-8611 (JP)
(74) Representative: Henkel & Partner mbB

(56) References cited:
- WO-A1-2019/202018
- US-B2- 10 023 038
- US-B2- 10 875 582
- US-B2- 8 863 877

## Description

### [Technical Field]

The present invention relates to a vehicle battery pack peripheral structure including a floor assembly constituting a floor of a vehicle, a battery pack located below the floor assembly, and an undercover that covers the battery pack from below.

### [Background Art]

In a vehicle that can be driven to travel using a motor, for example, an electric automobile or the like, a battery pack that supplies power to the motor is provided. In many cases, the battery pack is disposed below a floor assembly and is mounted to the floor assembly.

Such a vehicle typically includes an undercover that covers the battery pack from below in order to protect the battery pack. In consideration of manufacturing efficiency, the strength, and the like of the undercover, in some cases, the undercover is configured so as to connect a front panel and a rear panel located closer to a vehicle rear side than the front panel. Furthermore, there have been proposed various vehicle battery pack peripheral structures in which such a battery pack can be stably supported by the floor assembly, and the battery pack can be efficiently protected by the undercover.

As an example of the vehicle battery pack peripheral structure, the following vehicle battery pack peripheral structure is given. Specifically, one undercover is configured to connect two divided front half portion (front panel) and rear half portion (rear panel) with each other, and a connecting portion between the front half portion and the rear half portion is disposed so as to pass below the battery unit (battery pack). Furthermore, a pair of front support members are provided at a front end portion of the battery unit, and the pair of front support members are fixed to a cross member extending in a width direction of a vehicle body. (For example, see JP 2013-147070 A, in particular, paragraph [0020] to paragraph [0025], and Figure 1 and Figure 2.)

US 8 863 877 B2 discloses, for the purpose of reducing deformation of a battery unit in a vehicle rear-end collision, a vehicle battery mounting structure which includes a floor panel, a center cross member, a battery unit, a battery bracket, and a battery lower cover and that the battery unit in the form of a battery rear frame is assembled to the center cross member by means of the battery bracket.

### [Summary of Invention]

### [Problems to be Solved by the Invention]

In general, foreign matter such as gravel and muddy water splashed up by wheels of a vehicle, in particular, front wheels, or obstacles such as steps between sidewalks and traveling roads, curbstones, and car stoppers on which the vehicle runs tend to hit the undercover from a front side and a lower side of the vehicle. Furthermore, in the above-mentioned example of the vehicle battery pack peripheral structure, the connecting portion between the front panel and the rear panel of the undercover is provided so as to pass below the battery pack, and the front panel merely extends substantially flat in the range from a position forward from the battery pack to the middle of the battery pack in the vehicle front-rear direction. Furthermore, a rear region of the front panel is overlapped with a front region of the battery pack in the vehicle front-rear direction, and the rear region of the front panel is located close to the front region of the battery pack.

Therefore, in the above-mentioned example of the vehicle battery pack peripheral structure, the substantially flat front panel cannot sufficiently absorb an impact due to being hit by the matter or obstacles as described. Furthermore, the impact applied to a front region of the front panel may be transmitted to the front region of the battery pack via the rear region of the front panel. In this case, the undercover may not be able to sufficiently protect the battery pack. Furthermore, due to hitting the undercover by the matter or obstacles, unpleasant noise for occupants may be caused mainly from the undercover.

Furthermore, in the above-mentioned example of the vehicle battery pack peripheral structure, the battery pack is merely mounted to the cross member by the pair of front support members provided at the front end portion of the battery pack. Therefore, the mounting of the battery pack to the cross member may not be able to be sufficiently protected from the impact caused by foreign matter or obstacles when they hit the undercover from the front side and the lower side of the vehicle as described above. Therefore, the battery pack may not be able to be stably supported.

In view of such circumstances, in a vehicle battery pack peripheral structure, it is desired to efficiently protect a battery pack and stably support the battery pack.

### [Means for Solving the Problems]

In order to solve the problems, a vehicle battery pack peripheral structure according to the invention includes the features of claim 1.

### [Advantageous Effect of Invention]

In the vehicle battery pack peripheral structure according to the invention, the battery pack can be efficiently protected, and the battery pack can be stably supported.

### [Brief Description of Drawings]

[Figure 1] Figure 1 is an exploded perspective view for schematically illustrating a vehicle including a vehicle battery pack peripheral structure according to the present embodiment in a state where a battery pack and an undercover are disassembled.
[Figure 2] Figure 2 is a bottom view for schematically illustrating the vehicle battery pack peripheral structure according to the present embodiment.
[Figure 3] Figure 3 is a bottom view for schematically illustrating the vehicle battery pack peripheral structure according to the present embodiment in a state where the undercover is removed.
[Figure 4] Figure 4 is a sectional view taken along the line X-X of Figure 2.
[Figure 5] Figure 5 is a sectional view taken along the line Y-Y of Figure 2.
[Figure 6] Figure 6 is a sectional view taken along the line Z-Z of Figure 2.
[Figure 7] Figure 7 is a perspective view for schematically illustrating a bracket and its peripheral part of the vehicle battery pack peripheral structure according to the present embodiment in a state in which the undercover is removed.

### [Mode for Carrying Out the Invention]

A vehicle battery pack peripheral structure according to an embodiment is described together with a vehicle provided with the vehicle battery pack peripheral structure. The vehicle provided with the vehicle battery pack peripheral structure according to the present embodiment (hereinafter simply referred to as "battery pack peripheral structure" as necessary) is an electric automobile. However, the vehicle may be a motor-driven vehicle which is other than an electric automobile and can be provided with the battery pack peripheral structure.

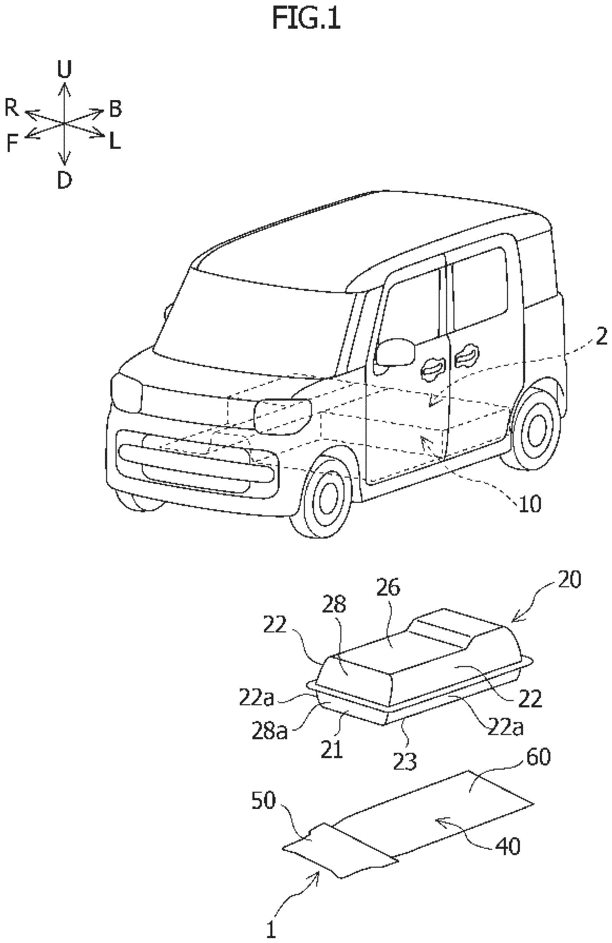

In Figure 1 to Figure 7 used in the description herein, directions based on the vehicle are referred to as follows: In Figure 1 to Figure 4, Figure 6, and Figure 7, the vehicle front side and the vehicle rear side are respectively indicated by the one-headed arrow F and the one-headed arrow B. In Figure 1 to Figure 3, Figure 5, and Figure 7, the left side and the right side as facing the vehicle front side are respectively indicated by the one-headed arrow L and the one-headed arrow R. The vehicle width direction is indicated by the one-headed arrow L and the one-headed arrow R. Furthermore, in Figure 1 and Figure 4 to Figure 7, the vehicle upper side and the vehicle lower side are respectively indicated by the one-headed arrow U and the one-headed arrow D.

The left side and the right side respectively indicate a left side and a right side when facing the vehicle front side. The horizontal direction indicates a direction along the front-rear direction and the width direction of the vehicle. The vehicle upper side and the vehicle lower side are respectively simply referred to as an upper side and a lower side in some cases.

### "Outline of Vehicle Undercover Structure"

With reference to Figure 1 to Figure 7, a vehicle battery pack peripheral structure 1 according to the present embodiment is described. That is, the vehicle battery pack peripheral structure 1 according to the present embodiment is schematically configured as described below. As illustrated in Figure 1, the vehicle battery pack peripheral structure 1 is provided in the vehicle.

As illustrated in Figure 1 to Figure 7, the vehicle battery pack peripheral structure 1 includes a floor assembly 10 constituting a floor 2 of the vehicle. As illustrated in Figure 1 and Figure 3 to Figure 6, the battery pack peripheral structure 1 includes a battery pack 20 located below the floor assembly 10.

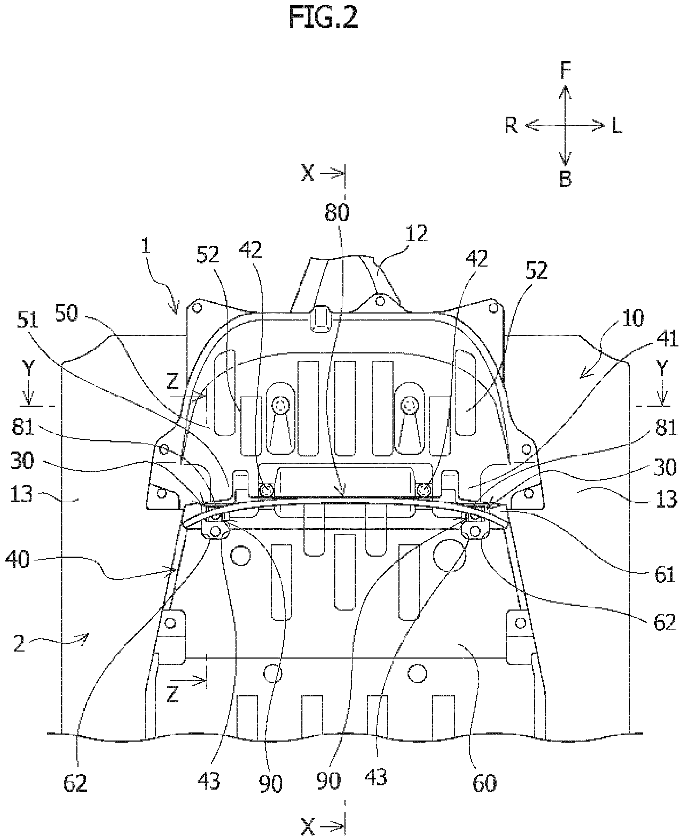

As illustrated in Figure 2, Figure 3, Figure 6, and Figure 7, the battery pack peripheral structure 1 includes brackets 30 configured so as to mount the battery pack 20 to the floor assembly 10. Here, the battery pack peripheral structure 1 according to the present embodiment includes two brackets 30 spaced from each other in the vehicle width direction. The battery pack peripheral structure may include only one of the two brackets.

In other words, the battery pack peripheral structure 1 according to the present embodiment includes a pair of left and right brackets 30 in the vehicle width direction. Those two brackets 30 are formed substantially symmetrical in the vehicle width direction. In the following, unless otherwise mentioned, only one of the two brackets 30 and its peripheral part are described.

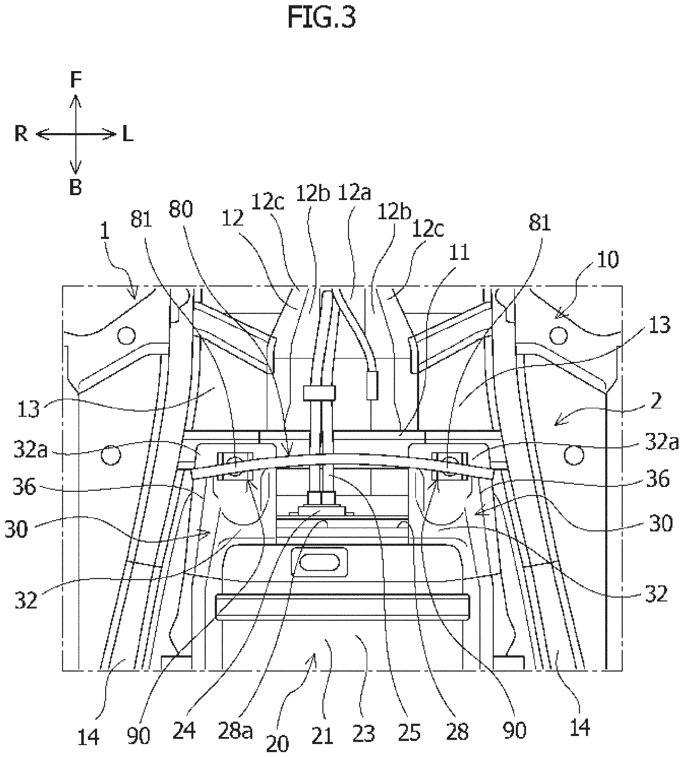

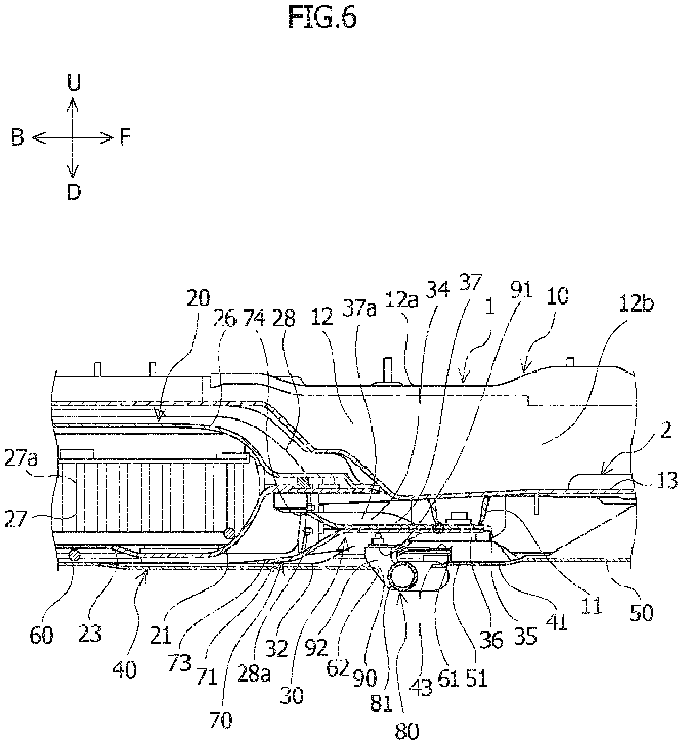

As illustrated in Figure 1, Figure 2, and Figure 4 to Figure 6, the battery pack peripheral structure 1 includes an undercover 40 that covers the battery pack 20 from below. As illustrated in Figure 3 to Figure 6, the floor assembly 10 includes a cross member 11 extending in the vehicle width direction along the floor assembly 10. As illustrated in Figure 6, the bracket 30 is mounted to the battery pack 20 and the cross member 11. The cross member 11 is disposed closer to the vehicle front side than a front end of the battery pack 20 in the vehicle front-rear direction.

As illustrated in Figure 1, Figure 2, Figure 4, and Figure 6, the undercover 40 includes a front panel 50 and a rear panel 60 located closer to the vehicle rear side than the front panel 50. A coupling region 41 that couples a rear-end region 51 of the front panel 50 in the vehicle front-rear direction and a front-end region 61 of the rear panel 60 in the vehicle front-rear direction is formed. As illustrated in Figure 6, a fixing region 70 that fixes the battery pack 20 and the bracket 30 to each other is located closer to the vehicle rear side than the coupling region 41.

Furthermore, the vehicle battery pack peripheral structure 1 according to the present embodiment can be schematically configured as described below. As illustrated in Figure 3 to Figure 6, the floor assembly 10 includes a floor tunnel 12 located at a substantially center thereof in the vehicle width direction. The floor tunnel 12 is formed so as to bulge upward and extend in the vehicle front-rear direction. The cross member 11 is disposed so as to cross the floor tunnel 12.

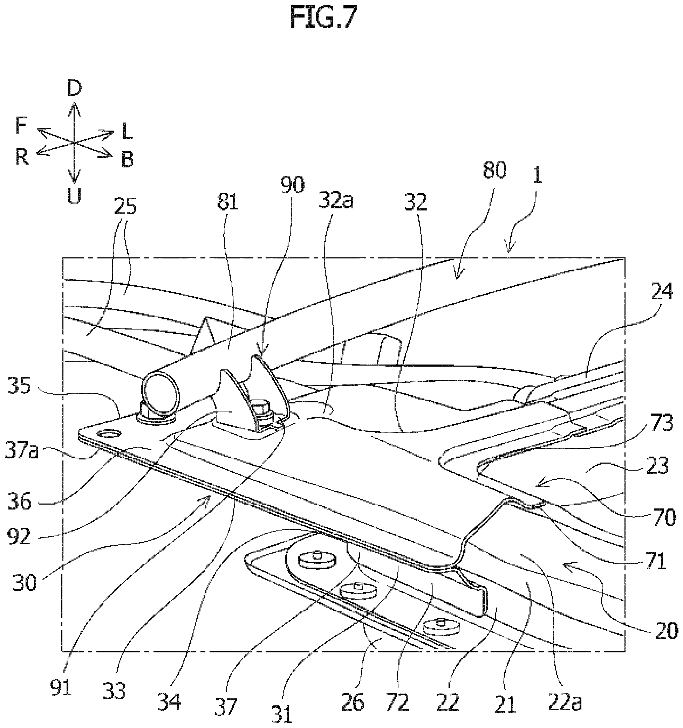

As illustrated in Figure 7, the bracket 30 is disposed so as to cover the battery pack 20 from the vehicle front side and the outer side in the vehicle width direction. The fixing region 70 includes a lower fixing portion 71 that fixes a lower region 21 of the battery pack 20 and the bracket 30 to each other.

The battery pack 20 includes a side wall 22 located at a side end thereof in the vehicle width direction. The battery pack 20 includes a bottom wall 23 located at a lower end thereof. The bracket 30 includes a side portion 31 opposed to the side wall 22 of the battery pack 20. The bracket 30 includes a bottom portion 32 opposed to the bottom wall 23 of the battery pack 20.

The fixing region 70 includes a side fixing area 72 that fixes the side wall 22 of the battery pack 20 and the side portion 31 of the bracket 30 to each other. The fixing region 70 includes a bottom fixing area 73 that fixes the bottom wall 23 of the battery pack 20 and the bottom portion 32 of the bracket 30 to each other. In particular, the lower fixing portion 71 of the fixing region 70 can include the side fixing area 72 and the bottom fixing area 73.

The bracket 30 includes a side coupling portion 33 that couples the side portion 31 and the bottom portion 32 thereof to each other. The side coupling portion 33 is disposed so as to be spaced from the side wall 22 of the battery pack 20.

As illustrated in Figure 2 to Figure 4, Figure 6, and Figure 7, the battery pack peripheral structure 1 includes a bar member 80 disposed below the bracket 30 along the vehicle width direction. The battery pack peripheral structure 1 includes a mounting member 90 configured so as to mount the bar member 80 to the bracket 30. The mounting member 90 is fixed to the bracket 30 and the bar member 80 in a state of being sandwiched between the bracket 30 and the bar member 80 in the up-down direction.

### "Details of floor assembly"

With reference to Figure 3 to Figure 6, the floor assembly 10 can be configured as described below in detail. The floor assembly 10 includes two floor panels 13, each located on either side of the floor tunnel 12 in the vehicle width direction. The cross member 11 is located below the floor tunnel 12 and the two floor panels 13.

In particular, as illustrated in Figure 3, the floor assembly 10 includes two side members 14 spaced from each other in the vehicle width direction. Each side member 14 is disposed along the front-rear direction. The cross member 11 extends in the vehicle width direction so as to couple these two side members 14.

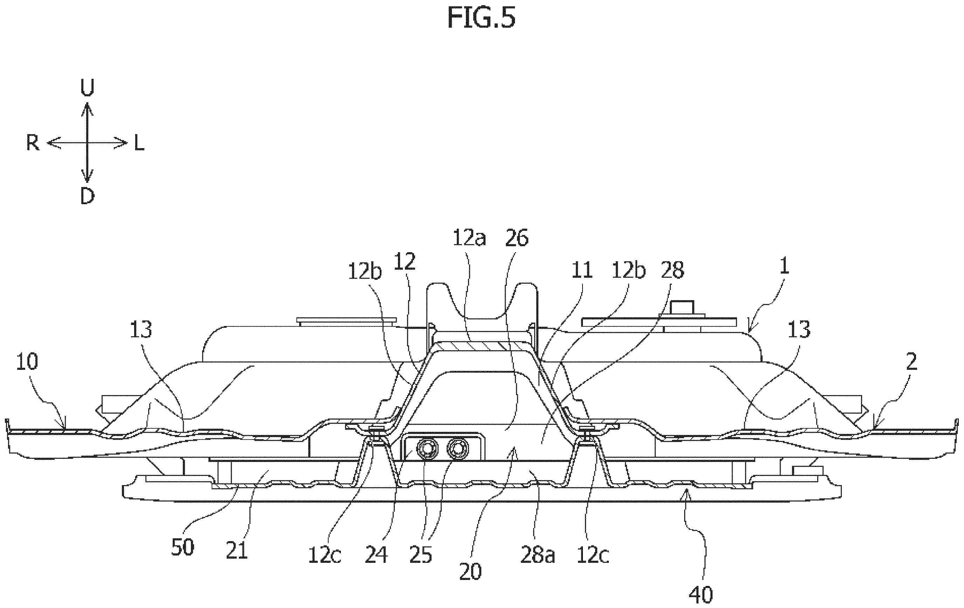

In particular, as illustrated in Figure 5, the floor tunnel 12 is formed so as to have a cross section having a substantially hat shape. The floor tunnel 12 includes a top surface portion 12a located at an upper end thereof. The floor tunnel 12 includes two side surface portions 12b each extending downward from either side end of the top surface portion 12a in the vehicle width direction. The two side surface portions 12b are formed so as to increase a distance between the two side surface portions 12b as they extend from the upper side toward the down side. The floor tunnel 12 includes two flange portions 12c respectively protruding from lower ends of the two side surface portions 12b toward both sides in the vehicle width direction.

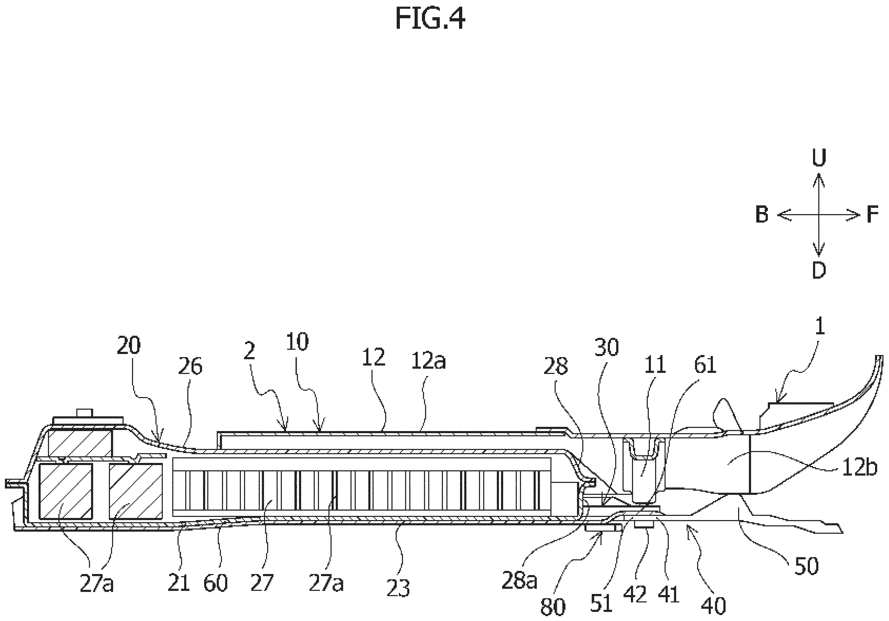

As illustrated in Figure 4, the cross member 11 is located so as to overlap with the coupling region 41 of the undercover 40 in the vehicle front-rear direction. With reference to Figure 3 to Figure 5, the cross member 11 abuts on the floor tunnel 12 in the up-down direction, and is joined to the floor tunnel 12 by welding. With reference to Figure 5 and Figure 6, the cross member 11 abuts also on the two floor panels 13 in the up-down direction, and is joined to each of the two floor panels 13 by welding. However, the joining can also be attained by joining means other than welding.

### "Details of Battery Pack"

With reference to Figure 1 and Figure 3 to Figure 7, the battery pack 20 can be configured as described below in detail. The battery pack 20 is configured to be capable of supplying power to a motor (not shown) used for travel driving of the vehicle. Furthermore, the battery pack 20 is configured to be chargeable.

As illustrated in Figure 3, Figure 5, and Figure 7, the battery pack 20 includes a connector 24 connected to high voltage cables 25 configured to be capable of supplying power to the outside and receiving power from the outside of the battery pack 20. Furthermore, the connector 24 is disposed so as to overlap with the floor tunnel 12 in the vehicle width direction.

As illustrated in Figure 1 and Figure 3 to Figure 7, the lower region 21 of the battery pack 20 is a lower case 21. An upper region 26 of the battery pack 20 is an upper case 26. The lower case 21 is located below the upper case 26. The lower case 21 is disposed so as to be aligned with the upper case 26 in the up-down direction and these are coupled to each other. As illustrated in Figure 4 and Figure 6, an internal device 27 including a battery module 27a of the battery pack 20 is disposed inside the lower case 21 and the upper case 26 coupled to each other in this way.

With reference to Figure 1 and Figure 3 to Figure 7, the battery pack 20 includes a front wall 28 located at a front end thereof. The front wall 28 is disposed along the vehicle width direction. Each side wall 22 is disposed along the vehicle front-rear direction. The bottom wall 23 is disposed along the horizontal direction. The lower case 21 includes a lower portion 22a of the side wall 22, the bottom wall 23, and a lower portion 28a of the front wall 28.

### "Details of Brackets"

With reference to Figure 6 and Figure 7, the bracket 30 can be configured as described below in detail. As illustrated in Figure 7, the side portion 31 of the bracket 30 is opposed to the lower portion 22a of the side wall 22 of the battery pack 20. As illustrated in Figure 6, the bracket 30 includes a front portion 34 opposed to the front wall 28 of the battery pack 20. Furthermore, the front portion 34 of the bracket 30 can be opposed to the lower portion 28a of the front wall 28.

The bracket 30 includes a front coupling portion 35 that couples the bottom portion 32 and the front portion 34 to each other. The front coupling portion 35 is disposed so as to be spaced from the front wall 28 of the battery pack 20. The front coupling portion 35 is continuous with the side coupling portion 33.

As illustrated in Figure 7, the bracket 30 includes a protruding region 36 formed so as to protrude from the front wall 28 of the battery pack 20 along the side wall 22 of the battery pack 20. The bracket 30 protrudes from the front wall 28 in a cantilever shape. The protruding region 36 is formed in a substantially planar shape along the horizontal direction.

As illustrated in Figure 6 and Figure 7, the bottom portion 32 of the bracket 30 is formed as one bottom member 32. The bracket 30 includes a corner member 37 at which the side portion 31 and the front portion 34 are integrally formed. The bottom member 32 and the corner member 37 respectively include protruding areas 32a and 37a formed so as to define the protruding region 36.

As illustrated in Figure 7, the side portion 31 of the bracket 30 is joined to the side wall 22 of the battery pack 20, in particular, the lower portion 22a of the side wall 22, by welding. The bottom portion 32 of the bracket 30 is joined to the bottom wall 23 of the battery pack 20 by welding. In the side coupling portion 33, the side portion 31 and the bottom portion 32 of the bracket 30 can be joined to each other by welding.

As illustrated in Figure 6, the front portion 34 of the bracket 30 is joined to the front wall 28 of the battery pack 20, in particular, the lower portion 28a of the front wall 28, by welding. The fixing region 70 includes a front fixing area 74 that fixes the front wall 28 of the battery pack 20 and the front portion 34 of the bracket 30 to each other. In particular, the lower fixing portion 71 of the fixing region 70 can include the front fixing area 74. As illustrated in Figure 6 and Figure 7, in the front coupling portion 35, the bottom portion 32 and the front portion 34 of the bracket 30 can be joined to each other by welding. However, the joining can also be attained by joining means other than welding.

### "Details of Undercover"

With reference to Figure 2 and Figure 4 to Figure 6, the undercover 40 can be configured as described below in detail. As illustrated in Figure 2 and Figure 5, the front panel 50 of the undercover 40 includes two side regions 52 respectively adjacent to both sides of the floor tunnel 12 in the vehicle width direction. In particular, although not clearly illustrated, the two side regions 52 are respectively located below a driver seat and a front passenger seat. As illustrated in Figure 4 and Figure 6, the rear panel 60 abuts on the battery pack 20 in the up-down direction.

With reference to Figure 2, Figure 4, and Figure 6, the undercover 40 includes two intermediate mounting portions 42 configured so as to mount the coupling region 41 of the undercover 40 to the cross member 11 through intermediation of the brackets 30. The two intermediate mounting portions 42 are respectively located closer to both sides of the floor tunnel 12 in the vehicle width direction. However, the undercover can include one or three or more intermediate mounting portions.

In particular, although not clearly illustrated, each intermediate mounting portion 42 is specifically configured so as to be fastened to the bracket 30, in particular, the protruding region 36 of the bracket 30, by fastening means using a bolt or screw and a nut in a state in which the rear-end region 51 of the front panel 50 and the front-end region 61 of the rear panel 60 overlap with each other in the up-down direction. However, this fastening can also be attained by fastening means other than the fastening means using a bolt or screw and a nut. The mounting of the intermediate mounting portion, the front panel, and the rear panel can also use means other than the fastening means.

As illustrated in Figure 2 and Figure 6, the undercover 40 has a relief groove 43 penetrating in the up-down direction in a manner of avoiding the mounting member 90. In more detail, the rear panel 60 has a cutout portion 62 cut out from the front-end region 61 of the rear panel 60 toward the vehicle rear side in a manner of avoiding the mounting member 90. The relief groove 43 is defined by the rear-end region 51 of the front panel 50 in the vehicle front-rear direction and the cutout portion 62 of the rear panel 60.

The undercover 40 can have two such relief grooves 43 penetrating in the up-down direction in a manner of respectively avoiding the two mounting members 90 described later. In this case, the rear panel 60 can have two cutout portions 62 cut out from the front-end region 61 toward the vehicle rear side in a manner of respectively avoiding the two mounting members 90. However, the number of the relief grooves of the undercover is not limited to two.

### "Details of Bar Member"

With reference to Figure 2 to Figure 4, Figure 6, and Figure 7, the bar member 80 can be configured as described below in detail. The bar member 80 is located below the front-end region 61 of the rear panel 60. The bar member 80 is opposed to the front-end region 61 of the rear panel 60 in the up-down direction.

The bar member 80 is disposed so as to be adjacent to the coupling region 41 of the undercover 40 in the vehicle front-rear direction. The bar member 80 extends over the entire front-end region 61 of the rear panel 60. The bar member 80 is formed in a substantially arc shape protruding from the vehicle rear side toward the vehicle front side. The bar member 80 can be formed in a pipe shape.

### "Details of Mounting Member"

With reference to Figure 2, Figure 3, and Figure 7, the mounting members 90 can be configured as described below in detail. As illustrated in Figure 2 and Figure 3, the battery pack peripheral structure 1 includes the two mounting members 90 arranged being spaced from each other in the vehicle width direction. However, the battery pack peripheral structure can also include one or three or more mounting members.

As illustrated in Figure 7, the mounting member 90 is located in the protruding region 36 of the bracket 30. The mounting member 90 includes a base portion 91 that abuts on the bottom portion 32 of the bracket 30 in the direction from the upper side toward the down side. The mounting member 90 includes a support portion 92 protruding downward from the base portion 91. An end portion 81 of the bar member 80 in the longitudinal direction abuts on the support portion 92 in the direction from the down side toward the upper side.

The mounting member 90 is fastened to the bracket 30 by fastening means using a bolt or screw and a nut. However, this fastening can also be attained by fastening means other than the fastening means using a bolt or screw and a nut. The mounting of the bracket and the mounting member can also use means other than the fastening means.

The support portion 92 of the mounting member 90 is joined to the end portion 81 of the bar member 80 in the longitudinal direction by welding. However, the joining can also be attained by joining means other than welding.

As described above, the vehicle battery pack peripheral structure 1 according to the present embodiment includes: the floor assembly 10 constituting the floor 2 of the vehicle; the battery pack 20 located below the floor assembly 10; the bracket 30 configured so as to mount the battery pack 20 to the floor assembly 10; and the undercover 40 that covers the battery pack 20 from below, the floor assembly 10 including the cross member 11 extending in the vehicle width direction along the floor assembly 10, the bracket 30 being mounted to the battery pack 20 and the cross member 11, in which the cross member 11 and the bracket 30 are disposed closer to the vehicle front side than the front end of the battery pack 20 in the vehicle front-rear direction, in which the undercover 40 includes the front panel 50 and the rear panel 60 located closer to the vehicle rear side than the front panel 50, in which the coupling region 41 that couples the rear-end region 51 of the front panel 50 in the vehicle front-rear direction and the front-end region 61 of the rear panel 60 in the vehicle front-rear direction is formed, and in which the fixing region 70 that fixes the battery pack 20 and the bracket 30 to each other is located closer to the vehicle rear side than the coupling region 41.

In general, at the time of traveling of the vehicle, foreign matter such as gravel and muddy water splash up from below the vehicle by wheels (not shown), in particular, front wheels (not shown), or obstacles such as steps between sidewalks and roads, curbstones, and car stoppers on which the vehicle runs are likely to hit a front part of the undercover 40 in the vehicle front-rear direction from the front side and the lower side of the vehicle.

In contrast, in the vehicle battery pack peripheral structure 1 according to the present embodiment, the front panel 50 is disposed closer to the vehicle front side than the battery pack 20. In this case, the battery pack 20 is located above the rear panel 60, whereas the battery pack 20 is not located above the front panel 50, and thus, a space is formed above the front panel 50. Such a space can have a sufficient height corresponding to the thickness of the battery pack 20 between the front panel 50 and the floor assembly 10. Therefore, even when foreign matter or the like hit the front panel 50, and impact, vibration, or the like resulting from the hitting are applied to the front panel 50, it is possible to suppress the direct transmission of such impact, vibration, or the like to the battery pack via the undercover 40.

Furthermore, the impact transmitted from the front panel 50 to the rear panel 60 can be relaxed by the coupling region 41 having high rigidity. As a result, the battery pack 20 located above the rear panel 60 can be efficiently protected from such impact. For example, even when the front panel 50 drops off, the battery pack 20 is kept covered by the rear panel 60, so that the battery pack 20 can be efficiently protected.

Furthermore, the fixing region 70 that fixes the battery pack 20 and the bracket 30 to each other is located closer to the vehicle rear side than the coupling region 41 having high rigidity. Therefore, the mounting of the battery pack 20 to the cross member 11 through intermediation of the bracket 30 can be efficiently protected from the impact caused by foreign matter or obstacles when they hit the undercover 40 from the front side and the lower side of the vehicle by the coupling region 41 having high rigidity. Accordingly, the battery pack 20 can be stably supported.

In the vehicle battery pack peripheral structure 1 according to the present embodiment, the floor assembly 10 includes the floor tunnel 12 located at the center in the vehicle width direction, the floor tunnel 12 is formed so as to bulge upward and extend in the vehicle front-rear direction, the cross member 11 is disposed so as to cross the floor tunnel 12, and the bracket 30 is disposed so as to cover the battery pack 20 from the vehicle front side and the outer side in the vehicle width direction.

In this vehicle battery pack peripheral structure 1, the fixing region 70 that fixes the battery pack 20 and the bracket 30 to each other can be disposed on the front side of the battery pack 20 and the outer side of the battery pack 20 in the vehicle width direction. Therefore, the fixing region 70 can be increased. As a result, the mounting rigidity of the battery pack 20 to the cross member 11 through intermediation of the bracket 30 can be enhanced. Thus, the battery pack 20 can be stably supported.

In the vehicle battery pack peripheral structure 1 according to the present embodiment, the fixing region 70 includes the lower fixing portion 71 that fixes the lower region 21 of the battery pack 20 and the bracket 30 to each other. Therefore, the battery pack 20 can be effectively protected by the bracket 30 from the impact caused by foreign matter or obstacles when they hit the undercover 40 from the front side and the lower side of the vehicle. Furthermore, with the bracket 30, the battery pack 20 can be stably supported from below.

In the vehicle battery pack peripheral structure 1 according to the present embodiment, the battery pack 20 includes the side wall 22 located at the side end thereof in the vehicle width direction, and the bottom wall 23 located at the lower end of the battery pack 20, the bracket 30 includes the side portion 31 opposed to the side wall 22 of the battery pack 20, and the bottom portion 32 opposed to the bottom wall 23 of the battery pack 20, the fixing region 70 includes the side fixing area 72 that fixes the side wall 22 of the battery pack 20 and the side portion 31 of the bracket 30 to each other, and the bottom fixing area 73 that fixes the bottom wall 23 of the battery pack 20 and the bottom portion 32 of the bracket 30 to each other, and the side coupling portion 33 that couples the side portion 31 and the bottom portion 32 of the bracket 30 to each other is disposed so as to be spaced from the side wall 22 of the battery pack 20.

In such a vehicle battery pack peripheral structure 1, the fixing region 70 can be increased by the side fixing area 72 and the bottom fixing area 73. As a result, the mounting rigidity of the battery pack 20 to the cross member 11 through intermediation of the bracket 30 can be enhanced. Thus, the battery pack 20 can be stably supported.

Furthermore, the side coupling portion 33 that couples the side portion 31 and the bottom portion 32 of the bracket 30 to each other is disposed so as to be spaced from the side wall 22 of the battery pack 20. Therefore, a space is formed between the bracket 30 and the battery pack 20. Such a space can relax the impact caused by foreign matter or obstacles when they hit the undercover 40 from the front side and the lower side of the vehicle. Therefore, the battery pack 20 can be efficiently protected by the space between the bracket 30 and the battery pack 20.

The vehicle battery pack peripheral structure 1 according to the present embodiment includes: the bar member 80 disposed below the bracket 30 along the vehicle width direction; and the mounting member 90 configured so as to mount the bar member 80 to the bracket 30, in which the mounting member 90 is fixed to the bracket 30 and the bar member 80 in a state of being sandwiched between the bracket 30 and the bar member 80 in the up-down direction.

In such a vehicle battery pack peripheral structure 1, the battery pack 20 can be efficiently protected from the impact caused by foreign matter or obstacles when they hit the undercover 40 from the front side and the lower side of the vehicle by the bar member 80.

### [Reference Signs List]

1 ... vehicle battery pack peripheral structure (battery pack peripheral structure), 2 ... floor
10 ... floor assembly, 11 ... cross member, 12 ... floor tunnel
20 ... battery pack, 21 ... lower region, lower case, 22 ... side wall, 23 ... bottom wall
30 ... bracket, 31 ... side portion, 32 ... bottom portion, bottom member, 33 ... side coupling portion
40 ... undercover, 41 ... coupling region, 50 ... front panel, 51 ... rear-end region, 60 ... rear panel, 61 ... front-end region
70 ... fixing region, 71 ... lower fixing portion, 72 ... side fixing area, 73 ... bottom fixing area
80 ... bar member
90 ... mounting member

## Claims

1. A vehicle battery pack peripheral structure (1) including:
a floor assembly (10) constituting a floor (2) of a vehicle;
a battery pack (20) located below the floor assembly (10);
a bracket (30) configured so as to mount the battery pack (20) to the floor assembly (10); and
an undercover (40) that covers the battery pack (20) from below,
the floor assembly (10) including a cross member (11) extending in a vehicle width direction along the floor assembly (10),
the bracket (30) being mounted to the battery pack (20) and the cross member (11),
wherein the cross member (11) is disposed closer to a vehicle front side than a front end of the battery pack (20) in a vehicle front-rear direction,
**characterized in that**:
the undercover (40) includes a front panel (50) disposed closer to the vehicle front side than the battery pack (20) and a rear panel (60) located closer to a vehicle rear side than the front panel (50), the battery pack (20) located above the rear panel (60) but not located above the front panel (50),
wherein a rear-end region (51) of the front panel (50) in the vehicle front-rear direction and a front-end region (61) of the rear panel (60) in the vehicle front-rear direction are coupled to each other at a coupling region (41), and
wherein a fixing region (70) in which the battery pack (20) and the bracket (30) are fixed to each other is located closer to the vehicle rear side than the coupling region (41).

2. The vehicle battery pack peripheral structure (1) according to claim 1,
wherein the floor assembly (10) includes a floor tunnel (12) located at a center of the floor assembly (10) in the vehicle width direction,
wherein the floor tunnel (12) is formed so as to bulge upward and extend in the vehicle front-rear direction,
wherein the cross member (11) is disposed so as to cross the floor tunnel (12), and
wherein the bracket (30) is disposed so as to cover the battery pack (20) from the vehicle front side and an outer side in the vehicle width direction.

3. The vehicle battery pack peripheral structure (1) according to claim 1 or 2, wherein the fixing region (70) includes a lower fixing portion (71) that fixes a lower region (21) of the battery pack (20) and the bracket (30) to each other.

4. The vehicle battery pack peripheral structure (1) according to any one of claims 1 to 3,
wherein the battery pack (20) includes a side wall (22) located at a side end of the battery pack (20) in the vehicle width direction, and a bottom wall (23) located at a lower end of the battery pack (20),
wherein the bracket (30) includes a side portion (31) opposed to the side wall (21) of the battery pack (20), and a bottom portion (32) opposed to the bottom wall (23) of the battery pack (20),
wherein the fixing region (70) includes a side fixing area (72) in which the side wall (22) of the battery pack (20) and the side portion (31) of the bracket (30) are fixed to each other, and a bottom fixing area (73) in which the bottom wall (23) of the battery pack (20) and the bottom portion (32) of the bracket (30) are fixed to each other, and
wherein a side coupling portion (33) that couples the side portion (31) and the bottom portion (32) of the bracket (30) to each other is disposed so as to be spaced from the side wall (22) of the battery pack (20).

5. The vehicle battery pack peripheral structure (1) according to any one of claims 1 to 4, comprising:
a bar member (80) disposed below the bracket (30) along the vehicle width direction; and
a mounting member (90) configured so as to mount the bar member (80) to the bracket (30),
wherein the mounting member (90) is fixed to the bracket (30) and the bar member (80) in a state of being sandwiched between the bracket (30) and the bar member (80) in an up-down direction.

## Patentansprüche

1. Eine periphere Struktur (1) eines Fahrzeugbatteriesatzes, umfassend:
eine Bodenbaugruppe (10), die einen Boden (2) eines Fahrzeugs bildet;
einen Batteriesatz (20), der sich unterhalb der Bodenbaugruppe (10) befindet;
eine Halterung (30), die konfiguriert ist, um den Batteriesatz (20) an der Bodenbaugruppe (10) zu montieren;
und
eine Abdeckung (40), die den Batteriesatz (20) von unten abdeckt,
die Bodenbaugruppe (10) einen Querträger (11) umfasst, der sich in einer Fahrzeugbreitenrichtung entlang der Bodenbaugruppe (10) erstreckt,
wobei die Halterung (30) an dem Batteriesatz (20) und dem Querträger (11) montiert ist,
wobei der Querträger (11) näher an einer Fahrzeugvorderseite als ein vorderes Ende des Batteriesatzes (20) in einer Fahrzeug-Vorne-Hinten-Richtung angeordnet ist,
**dadurch gekennzeichnet, dass**
die Abdeckung (40) eine vordere Platte (50), die näher an der Fahrzeugvorderseite als der Batteriesatz (20) angeordnet ist, und eine hintere Platte (60) umfasst, die näher an einer Fahrzeugrückseite als die vordere Platte (50) angeordnet ist, wobei der Batteriesatz (20) über der hinteren Platte (60), aber nicht über der vorderen Platte (50) angeordnet ist,
wobei ein hinterer Endbereich (51) der vorderen Platte (50) in der Fahrzeug-Vorne-Hinten-Richtung und ein vorderer Endbereich (61) der hinteren Platte (60) in der Fahrzeug-Vorne-Hinten-Richtung an einem Kopplungsbereich (41) miteinander gekoppelt sind, und
wobei ein Befestigungsbereich (70), in dem der Batteriesatz (20) und die Halterung (30) aneinander befestigt sind, näher an der Fahrzeugrückseite angeordnet ist als der Kopplungsbereich (41).

2. Die periphere Struktur (1) des Fahrzeugbatteriesatzes nach Anspruch 1,
wobei die Bodenbaugruppe (10) einen Bodentunnel (12) umfasst, der in der Mitte der Bodenbaugruppe (10) in der Fahrzeugbreitenrichtung angeordnet ist,
wobei der Bodentunnel (12) so geformt ist, dass er sich nach oben wölbt und in der Fahrzeug-Vorne-Hinten-Richtung erstreckt,
wobei der Querträger (11) so angeordnet ist, dass er den Bodentunnel (12) kreuzt, und
wobei die Halterung (30) so angeordnet ist, dass sie den Batteriesatz (20) von der Fahrzeugvorderseite und einer Außenseite in der Fahrzeugbreitenrichtung abdeckt.

3. Die periphere Struktur (1) des Fahrzeugbatteriesatzes nach Anspruch 1 oder 2, wobei der Befestigungsbereich (70) einen unteren Befestigungsabschnitt (71) umfasst, der einen unteren Bereich (21) des Batteriesatzes (20) und die Halterung (30) aneinander befestigt.

4. Die periphere Struktur (1) des Fahrzeugbatteriesatzes gemäß einem der Ansprüche 1 bis 3,
wobei der Batteriesatz (20) eine Seitenwand (22), die an einem Seitenende des Batteriesatzes (20) in der Fahrzeugbreitenrichtung angeordnet ist, und eine Bodenwand (23), die an einem unteren Ende des Batteriesatzes (20) angeordnet ist, umfasst,
wobei die Halterung (30) einen Seitenabschnitt (31) gegenüber der Seitenwand (21) des Batteriesatzes (20) und einen Bodenabschnitt (32) gegenüber der Bodenwand (23) des Batteriesatzes (20) umfasst,
wobei der Befestigungsbereich (70) einen Seitenbefestigungsbereich (72), in dem die Seitenwand (22) des Batteriesatzes (20) und der Seitenabschnitt (31) der Halterung (30) aneinander befestigt sind, und einen Bodenbefestigungsbereich (73), in dem die Bodenwand (23) des Batteriesatzes (20) und der Bodenabschnitt (32) der Halterung (30) aneinander befestigt sind, und
wobei ein Seitenkopplungsabschnitt (33), der den Seitenabschnitt (31) und den Bodenabschnitt (32) der Halterung (30) miteinander koppelt, so angeordnet ist, dass er von der Seitenwand (22) des Batteriesatzes (20) beabstandet ist.

5. Die periphere Struktur (1) des Fahrzeugbatteriesatzes gemäß einem der Ansprüche 1 bis 4, umfassend:
ein Stangenelement (80), das unterhalb der Halterung (30) entlang der Fahrzeugbreitenrichtung angeordnet ist; und
ein Befestigungselement (90), das so konfiguriert ist, dass es das Stangenelement (80) an der Halterung (30) montiert,
wobei das Befestigungselement (90) an der Halterung (30) und dem Stangenelement (80) in einem Zustand befestigt ist, in dem es zwischen der Halterung (30) und dem Stangenelement (80) in einer Auf-Ab-Richtung angeordnet ist.

## Revendications

1. Structure (1) périphérique de bloc-batterie de véhicule comprenant :
un ensemble (10) de plancher constituant un plancher (2) d'un véhicule ;
un bloc-batterie (20) disposé en-dessous de l'ensemble (10) de plancher ;
un support (30) configuré pour monter le bloc-batterie (20) sur l'ensemble (10) de plancher ; et
un sous-recouvrement (40), qui recouvre le bloc-batterie (20) par en-dessous ;
l'ensemble (10) de plancher comprenant une traverse (11) s'étendant dans la direction en largeur du véhicule le long de l'ensemble (10) de plancher,
le support (30) étant monté sur le bloc-batterie (20) et la traverse (11),
dans laquelle la traverse (11) est disposée plus près d'un côté avant du véhicule que d'une extrémité avant du bloc-batterie (20) dans une direction avant-arrière du véhicule,
**caractérisée en ce que** :
le sous-recouvrement (40) comprend un panneau (50) avant disposé plus près du côté avant du véhicule que du bloc-batterie (20) et un panneau (60) arrière disposé plus près d'un côté arrière du véhicule que du panneau (50) avant, le bloc-batterie (20) étant disposé au-dessus du panneau (60) arrière, mais n'étant pas disposé au-dessus du panneau (50) avant,
dans laquelle une région (51) d'extrémité arrière du panneau (50) avant dans la direction avant-arrière du véhicule et une région (61) d'extrémité avant du panneau (60) arrière dans la direction avant-arrière du véhicule sont accouplées l'une à l'autre en une région (41) d'accouplement, et
dans laquelle une région (70) de fixation, dans laquelle le bloc-batterie (20) et le support (30) sont fixés l'un à l'autre, est disposée plus près du côté arrière du véhicule que de la région (41) d'accouplement.

2. Structure (1) périphérique de bloc-batterie de véhicule suivant la revendication 1,
dans laquelle l'ensemble (10) de plancher comprend un tunnel (12) de plancher disposé au centre de l'ensemble (10) de plancher dans la direction en largeur du véhicule,
dans laquelle le tunnel (12) de plancher est formé, de manière à être bombé vers le haut et s'étendent dans la direction avant-arrière du véhicule,
dans laquelle la traverse (11) est disposée, de manière à être en travers du tunnel (12) de plancher, et
dans laquelle le support (30) est disposé, de manière à recouvrir le bloc-batterie (20) du côté avant du véhicule et d'un côté extérieur dans la direction en largeur du véhicule.

3. Structure (1) périphérique de bloc-batterie de véhicule suivant la revendication 1 ou 2, dans laquelle la région (70) de fixation comprend une partie (71) inférieure de fixation, qui fixe une région (21) inférieure du bloc-batterie (20) et le support (30) l'un à l'autre.

4. Structure (1) périphérique de bloc-batterie de véhicule suivant l'une quelconque des revendications 1 à 3,
dans laquelle le bloc-batterie (20) comprend une paroi (22) latérale disposée à une extrémité latérale du bloc-batterie (20) dans la direction en largeur du véhicule, et une paroi (23) de fond disposée à une extrémité inférieure du bloc-batterie (20) ,
dans laquelle le support (30) comprend une partie (31) latérale opposée à la paroi (21) latérale du bloc-batterie (20), et une partie (32) de fond opposée à la paroi (23) de fond du bloc-batterie (20),
dans laquelle la région (70) de fixation comprend une zone (72) latérale de fixation, dans laquelle la paroi (22) latérale du bloc-batterie (20) et la partie (31) latérale du support (30) sont fixées l'une à l'autre, et une zone (73) de fixation de fond, dans laquelle la paroi (23) de fond du bloc-batterie (20) et la partie (32) de fond du support (30) sont fixées l'une à l'autre, et
dans laquelle une partie (33) latérale d'accouplement, qui accouple la partie (31) latérale et la partie (32) de fond du support (30) l'une à l'autre, est disposée, de manière à être à distance de la paroi (22) latérale du bloc-batterie (20).

5. Structure (1) périphérique de bloc-batterie du véhicule suivant l'une quelconque des revendications 1 à 4, comprenant :
un élément (80) formant barre disposé en-dessous du support (30) suivant la direction en largeur du véhicule ; et
un élément (90) de montage configuré pour monter l'élément (80) formant barre sur le support (30),
dans laquelle l'élément (90) de montage est fixé au support (30) et à l'élément (80) formant barre, dans un état dans lequel il est pris en sandwich entre le support (30) et l'élément (80) formant barre dans une direction de haut en bas.
